# EUROPEAN PATENT APPLICATION

(11) **EP 3 967 529 A1**
(43) Date of publication of application: **16.03.2022**
(21) Application number: 21195653.7
(22) Date of filing: 09.09.2021
(51) Int. Cl.: B60G 3/20, B60G 7/02, B60G 13/00

(54) **ALL TERRAIN VEHICLE SUSPENSION**

(30) Priority: 15.09.2020 CN 202022025509 U
(71) Applicant: Segway Technology Co., Ltd., Jiangsu 213000 (CN)
(72) Inventor: DONG, Zhen, Changzhou, 213000 (CN); YAN, Shuting, Changzhou, 213000 (CN)
(74) Representative: Papa, Elisabetta

(57) **Abstract**

A vehicle (100) is provided. The vehicle (100) includes a frame (10) and a front shock absorber (11). The front shock absorber (11) is arranged to the frame (10) and extends obliquely backward from bottom to top. An included angle between a projection of a central axis of the front shock absorber (11) on a longitudinal central plane of the vehicle (100) and a projection of a vertical line of the ground passing through a lower end of the front shock absorber (11) on the longitudinal central plane is denoted as a, and α meets a relation of 9°≤α≤20°.

## Description

### FIELD

The present disclosure relates to a field of vehicle technologies, and more particularly, to a vehicle.

### BACKGROUND

In the related art, the design of a front shock absorber of a vehicle, especially a vehicle with an off-road use, focuses on a support force for a vertical load, so that the vehicle such as the vehicle with the off-road use generally has an obvious phenomenon of braking nodding.

### SUMMARY

The present disclosure aims to solve at least one of the technical problems existing in the related art. Therefore, an objective of the present disclosure is to propose a vehicle, which can significantly reduce the phenomenon of braking nodding.

Embodiments of the present disclosure provide a vehicle. The vehicle includes: a frame; and a front shock absorber arranged to the frame and extends obliquely backward from bottom to top. An included angle between a projection of a central axis of the front shock absorber on a longitudinal central plane of the vehicle and a projection of a vertical line of the ground passing through a lower end of the front shock absorber on the longitudinal central plane is denoted as α, and α meets a relation of 9°≤α≤20°.

In the vehicle according to the embodiments of the present utility, the front shock absorber extends obliquely backward from bottom to top, and the included angle between the projection of the central axis of the front shock absorber on the longitudinal central plane of the vehicle and the projection of the vertical line of the ground passing through the lower end of the front shock absorber on the longitudinal central plane is denoted as α,and α meets the relation of 9°≤α≤20°, so that the phenomenon of braking nodding can be significantly reduced, and a good effect against the braking nodding can be achieved.

According to some embodiments of the present disclosure, α is 11°.

According to some embodiments of the present disclosure, two front shock absorbers are provided, and the two front shock absorbers are arranged symmetrically in a left-right direction.

According to some embodiments of the present disclosure, a first suspension rocker arm is arranged to the lower end of the front shock absorber, and an included angle between projections of a rotation axis of the first suspension rocker arm and the central axis of the front shock absorber on the longitudinal central plane of the vehicle is denoted as β, and β meets a relation of 75°≤β≤90°.

According to some embodiments of the present disclosure, β is 90°.

According to some embodiments of the present disclosure, the first suspension rocker arm includes two first rocking rods, first ends of the two first rocking rods are connected and rotatably connected to the lower end of the front shock absorber, second ends of the two first rocking rods are pivotally connected to the frame, respectively, and a pivot axis of the second end of each of the two first rocking rods is the rotation axis of the first suspension rocker arm.

According to some embodiments of the present disclosure, a first connecting rod is connected between the two first rocking rods.

According to some embodiments of the present disclosure, the two first rocking rods and the first connecting rod are in an "A" shape.

According to some embodiments of the present disclosure, the first connecting rod is connected to a portion of each of the two first rocking rods adjacent to the rotation axis of the first suspension rocker arm.

According to some embodiments of the present disclosure, a second suspension rocker arm is arranged below the first suspension rocker arm, a first end of the second suspension rocker arm is rotatably connected to the first ends of the two first rocking rods through a steering knuckle, and a second end of the second suspension rocker arm is pivotally connected to the frame.

According to some embodiments of the present disclosure, the second suspension rocker arm includes two second rocking rods, first ends of the two second rocking rods are rotatably connected to the steering knuckle, and second ends of the two second rocking rods are pivotally connected to the frame, respectively.

According to some embodiments of the present disclosure, a second connecting rod is connected between the two second rocking rods.

According to some embodiments of the present disclosure, the two second rocking rods and the second connecting rod are in an "A" shape.

According to some embodiments of the present disclosure, the second connecting rod is connected to a portion of each of the two second rocking rods adjacent to the first end of each of the two second rocking rods; or the second connecting rod is connected to a portion of each of the two second rocking rods adjacent to the second end of each of the two second rocking rods.

According to some embodiments of the present disclosure, the vehicle is an all-terrain vehicle.

Additional aspects and advantages of the present disclosure will be given in part in the following description, become apparent in part from the following description, or be learned from the practice of the present disclosure.

### BRIEF DESCRIPTION OF THE DRAWINGS

The above and/or additional aspects and advantages of the present disclosure will become apparent and easy to understand from the below descriptions of the embodiments in combination with the accompanying drawings.
Fig. 1 is a partial perspective view of a vehicle according to an embodiment of the present disclosure.
Fig. 2 is a side view of the vehicle shown in Fig. 1.
Fig. 3 is a partial perspective view of a vehicle according to another embodiment of the present disclosure.
Fig. 4 is a side view of the vehicle shown in Fig. 3.

### DETAILED DESCRIPTION

Embodiments of the present disclosure are described in detail below. The embodiments described with reference to accompanying drawings are exemplary.

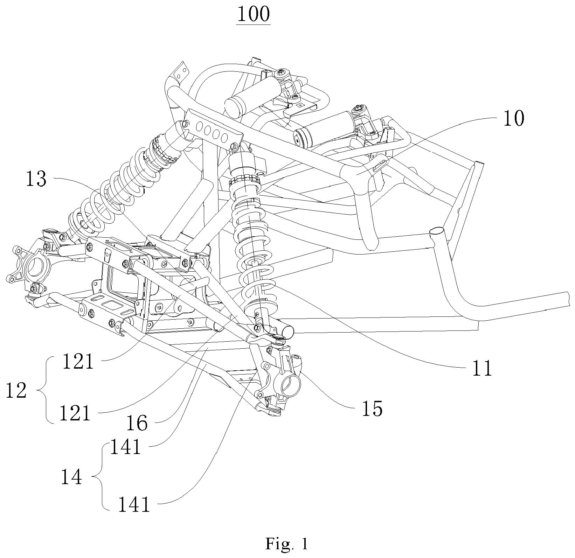

A vehicle according to the embodiments of the present disclosure is described below with reference to Figs. 1-4. The vehicle 100 may be an all-terrain vehicle. In the following description of the present application, the vehicle 100 is described by an example in which the vehicle 100 is the all-terrain vehicle. Of course, those skilled in the art can understand that the vehicle 100 can further be other types of vehicles, rather than being limited to the all-terrain vehicle.

As shown in Figs. 1-4, the vehicle 100 according to the embodiments of the present disclosure may include a frame 10 and a front shock absorber 11.

Specifically, the frame 10 can provide a mounting carrier for mounting a powertrain, a steering system, etc. of the vehicle 100, so as to ensure the stability of the whole vehicle 100. The front shock absorber 11 is arranged on the frame 10, and extends obliquely backward from bottom to top. Here, it should be noted that a "front" direction can be understood as a direction of a front part of the vehicle, and an opposite direction is defined as a "rear" direction, that is, a direction of a rear part of the vehicle.

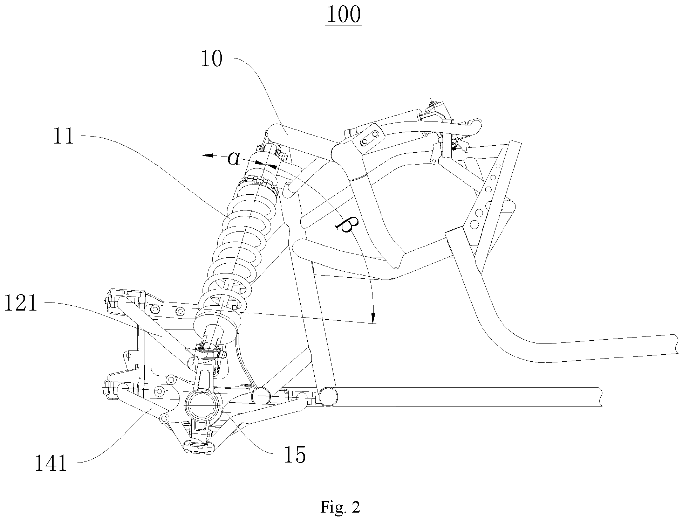

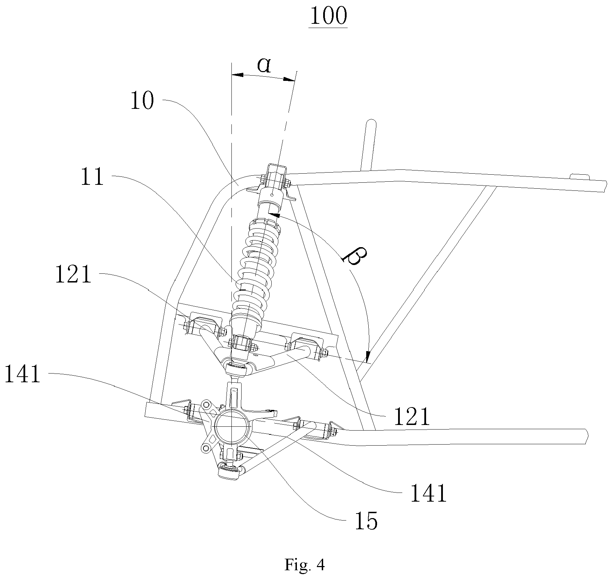

An included angle between a projection of a central axis of the front shock absorber 11 on a longitudinal central plane of the vehicle 100 and a projection of a vertical line of the ground passing through a lower end of the front shock absorber 11 on the longitudinal central plane is α, and α meets a relation of 9°≤α≤ 20°, as shown in Fig. 2 and Fig. 4. When the included angle α is less than 9°, an inclination angle of the front shock absorber 11 is relatively small, and a support force for a forward dynamic load caused by a load transfer due to a braking deceleration is poor, so that there may be an obvious phenomenon of a braking nodding. When the included angle α is greater than 20°, the inclination angle of the front shock absorber 11 is too large, and a support force for a vertical load may be small, so that the vehicle 100 may not be well adapted to complex road conditions.

Thus, the front shock absorber 11 is arranged to extend obliquely backward with an angle range of 9°≤α≤20°, so that the front shock absorber 11 arranged obliquely can be used to improve a support stiffness of a front suspension system when a center of gravity of the vehicle 100 transfers due to a large braking deceleration during a braking process of the vehicle 100. Therefore, the support force for the forward dynamic load caused by the load transfer due to the braking deceleration is good, an obvious effect against the braking nodding can be achieved, and the vehicle 100 can well be adapted to various road conditions (including the complex road conditions, etc.).

In the vehicle 100 according to the embodiments of the present disclosure, the front shock absorber 11 is arranged to extend obliquely backward from bottom to top, and the included angle α between the projection of the central axis of the front shock absorber 11 on the longitudinal central plane of the vehicle 100 and the projection of the vertical line of the ground passing through the lower end of the front shock absorber 11 on the longitudinal central plane meets the relation of 9°≤α≤20°, so that the phenomenon of the braking nodding can be significantly reduced and a good effect against the braking nodding can be achieved.

According to some embodiments of the present disclosure, α can be 11°. In this way, the vehicle 100 can achieve the good effect against the braking nodding, and also the vehicle 100 can be well adapted to various road conditions (including the complex road conditions, etc.). It can be understood that, a specific value of the included angle α can be set specifically according to actual structural design requirements of the vehicle 100. That is, α can be any angle between 9° and 20°. For example, α can also be 17° and so on.

In addition, it can be understood that the vehicle 100 may include a front wheel and a front suspension, and the front suspension includes the front shock absorber 11. Below, the description will be made by an example in which the vehicle 100 has two front wheels, such as a left front wheel and a right front wheel (not shown in drawings), and two front suspensions, such as a left front suspension and a right front suspension, and the left front suspension and the right front suspension are double A-arm independent suspensions (as shown in Figs. 1-4), but the present disclosure is not only limited to such vehicle 100 and double A-arm independent suspensions. For the above vehicle 100 including the two front wheels and the two front suspensions, the left front suspension and the right front suspension may include the front shock absorber 11, respectively. The longitudinal central plane of the vehicle 100 may be defined by a central plane between the left front wheel and the right front wheel. The left front wheel and the right front wheel are rotatably connected to the left front suspension and the right front suspension, respectively, are connected to the frame 10 through the left front suspension and the right front suspension, and support the frame 10.

As shown in Figs. 1-4, two front shock absorbers 11 may be provided, and the two front shock absorbers 11 are arranged symmetrically in a left-right direction, i.e. about the longitudinal central plane of the vehicle 100. With this arrangement, the vibration of the frame 10 can be further rapidly attenuated, and the smoothness and the comfort of the vehicle 100 during driving can be improved.

According to some embodiments of the present disclosure, as shown in Figs. 1-4, a first suspension rocker arm 12 is arranged to the lower end of the front shock absorber 11, and an included angle between projections of a rotation axis of the first suspension rocker arm 12 and the central axis of the front shock absorber 11 on the longitudinal central plane of the vehicle 100 is denoted as β, and β meets a relation of 75°≤β≤90°. When the included angle β is less than 75°, the front shock absorber 11 may bear an excessive additional load during operation, so that the front shock absorber 11 may be damaged because of bearing the excessive additional load. When the included angle β is greater than 90°, the front shock absorber will be inclined forward, thus aggravating the nodding phenomenon. This arrangement can ensure that the front shock absorber 11 will not bear the excessive additional load during operation, so as to prolong the service life of the front shock absorber 11.

In some embodiments, β is 90°. This arrangement can ensure that the front shock absorber 11 can bear a minimum additional load while achieving the good effect against the braking nodding, thus further prolonging the service life of the front shock absorber 11. Of course, it can be understood that, β can be any angle between 75° and 90°. For example, β can also be 78° and so on.

According to some specific embodiments of the present disclosure, as shown in Fig. 1, the first suspension rocker arm 12 includes two first rocking rods 121, first ends of the two first rocking rods 121 are connected and rotatably connected to the lower end of the front shock absorber 11 (for example, connected by an joint bearing, but not limited to this), and second ends of the two first rocking rods 121 are pivotally connected to the frame 10, respectively (for example, connected by an joint bearing, but not limited to this). A pivot axis of each of the second ends of the two first rocking rods 121 is a rotation axis of the first suspension rocker arm 12. With this arrangement, when the wheels steer, the two rocking rods 121 can absorb a lateral force applied to a tire, and thus an inclination of the vehicle when steering is small. In addition, the two rocking rods 121 can pivot relative to the frame 10, so as to prevent connection portions between the two rocking rods 121 and the frame 10 from being broken because of bearing an excessive force when the vehicle 100 is driving on a rough road. Similarly, the rotatable connection between the first ends of the two first rocking rods 121 and the lower end of the front shock absorber 11 also prevents connection portions between the two first rocking rods 121 and the front shock absorber 11 from being broken because of bearing an excessive force.

Further, referring to Fig. 1, a first connecting rod 13 may be connected between the two first rocking rods 121. The two first rocking rods 121 and the first connecting rod 13 are substantially in an "A" shape. Thus, by arranging the first connecting rod 13 between the two first rocking rods 121, the connecting stability of the two first rocking rods 121 can be strengthened and the structural strength of the first suspension rocker arm 12 can be improved.

In some embodiments, referring to Fig. 1, the first connecting rod 13 may be connected to a portion of each of the two first rocking rods 121 adjacent to the rotation axis of the first suspension rocker arm 12, so as to further improve the connecting stability of the two first rocking rods 121. Of course, two ends of the first connecting rod 13 can be arranged at any position between respective two ends of the two first rocking rods 121, respectively.

It can be understood that a number of the first connecting rods 13 can be set specifically according to actual requirements, so as to better satisfy the practical applications.

According to a further embodiment of the present disclosure, referring to Fig. 1, a second suspension rocker arm 14 is arranged below the first suspension rocker arm 12, a first end of the second suspension rocker arm 14 is rotatably connected to the first ends of the two first rocking rods 121 through a steering knuckle 15, and a second end of the second suspension rocker arm 14 is pivotally connected to the frame 10 (for example, connected by a joint bearing, but not limited to this). Thus, when the front wheels steer, the first suspension rocker arm 12 and the second suspension rocker arm 14 arranged one above the other can absorb the lateral force applied to the tire simultaneously, and thus the inclination of the vehicle when steering is small. In addition, the second suspension rocker arm 14 can pivot relative to the frame 10, so as to prevent a connection portion between the second suspension rocker arm 14 and the frame 10 from being broken because of bearing an excessive force when the vehicle 100 is driving on a rough road. Similarly, the first end of the second suspension rocker arm 14 is rotatably connected to the first ends of the two first rocking rods 121, so as to prevent connection portions between the second suspension rocker arm 14 and the two first rocking rods 121 from being broken because of bearing an excessive force.

Further, still referring to Fig. 1, the second suspension rocker arm 14 also includes two second rocking rods 141, first ends of the two second rocking rods 141 are rotatably connected to the steering knuckle 15, and second ends of the two second rocking rods 141 are pivotally connected to the frame 10, respectively. This arrangement prevents connection portions between the two second rocking rods 141 and the frame 10 from being broken because of bearing an excessive force when the vehicle 100 is driving on a rough road.

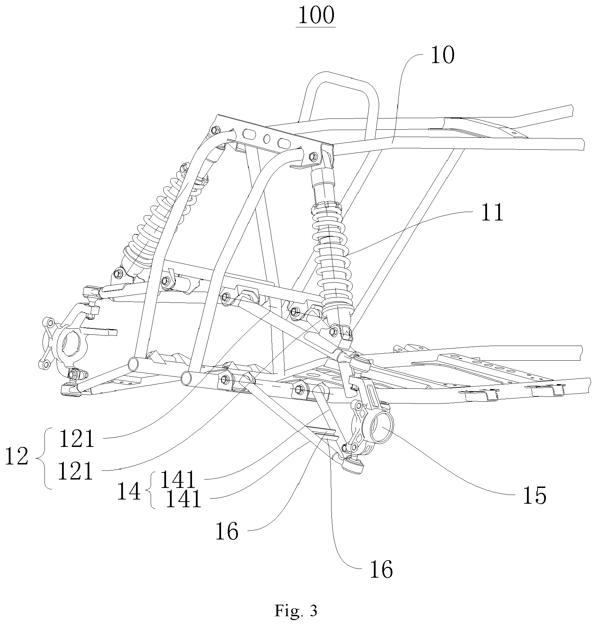

Further, referring to Fig. 1 and Fig. 3, a second connecting rod 16 may be connected between the two second rocking rods 141, and two ends of the second connecting rod 16 are located between respective two ends of the two second rocking rods 141, respectively. The two second rocking rods 141 and the second connecting rod 16 are substantially in an "A" shape. Therefore, by arranging the second connecting rod 16 between the two second rocking rods 141, the connecting stability of the two second rocking rods 141 can be strengthened and the structural strength of the second suspension rocker arm 14 can be improved.

Further, two or more second connecting rods 16 may be arranged between the two second rocking rods 141 to enhance the connecting stability between the second rocking rods 141. For example, two second connecting rods 16 are arranged between the two second rocking rods 141 of the second suspension rocker arm 14 shown in Fig. 3.

In some embodiments, referring to Fig. 1, the second connecting rod 16 may be connected to a portion of each of the two second rocking rods 141 adjacent to the second end of each of the two second rocking rods 141, so as to further improve the connecting stability of the two second rocking rods 141. In some embodiments, as shown in Fig. 3, the second connecting rod 16 may also be connected to a portion of each of the two second rocking rods 141 adjacent to the first end of each of the two second rocking rods 141, so as to further improve the connecting stability of the two second rocking rods 141.

Of course, the two ends of the second connecting rod 16 can be arranged at any position between respective two ends of the two second rocking rods 141, respectively.

It can be understood that a number of the second connecting rods 16 can be set specifically according to actual requirements, so as to better satisfy the practical applications.

Other configurations and operations of the vehicle 100 according to the embodiments of the present disclosure are known to those skilled in the art, and will not be described in detail here.

In the description of the present disclosure, it is to be understood that terms such as "central," "upper," "lower," "front," "left," "right," "vertical," "horizontal," "top," "bottom," "inner," "outer," "axial," should be construed to refer to the orientation or position as then described or as shown in the drawings under discussion. These relative terms are for convenience of description of the present disclosure and do not indicate or imply that the device or element referred to must have a particular orientation, or be constructed and operated in a particular orientation. Thus, these terms shall not be construed as limitation on the present disclosure.

Reference throughout this specification to "some embodiments," "an exemplary embodiment," "an example," or "some examples," means that a particular feature, structure, material, or characteristic described in connection with the embodiment or example is included in at least one embodiment or example of the present disclosure. Thus, the exemplary descriptions of the above terms throughout this specification are not necessarily referring to the same embodiment or example.

Although embodiments of the present disclosure have been shown and described, it would be appreciated by those skilled in the art that various changes, modifications, alternatives and variations may be made in the embodiments without departing from principles and purposes of the present disclosure. The scope of the present disclosure is defined by the claims and their equivalents.

## Claims

1. A vehicle (100), comprising:
a frame (10); and
a front shock absorber (11) arranged to the frame (10) and extends obliquely backward from bottom to top, wherein an included angle between a projection of a central axis of the front shock absorber (11) on a longitudinal central plane of the vehicle (100) and a projection of a vertical line of the ground passing through a lower end of the front shock absorber (11) on the longitudinal central plane is denoted as α,and α meets a relation of 9°≤α≤20°.

2. The vehicle (100) according to claim 1, wherein α is 11°.

3. The vehicle (100) according to claim 1 or 2, wherein two front shock absorbers (11) are provided, and the two front shock absorbers (11) are arranged symmetrically in a left-right direction.

4. The vehicle (100) according to any one of claims 1 to 3, wherein a first suspension rocker arm (12) is arranged to the lower end of the front shock absorber (11), and an included angle between projections of a rotation axis of the first suspension rocker arm (12) and the central axis of the front shock absorber (11) on the longitudinal central plane of the vehicle (100) is denoted as β, and β meets a relation of 75°≤β≤90°.

5. The vehicle (100) according to claim 4, wherein β is 90°.

6. The vehicle (100) according to claim 4 or 5, wherein the first suspension rocker arm (12) comprises two first rocking rods (121), first ends of the two first rocking rods (121) are connected and rotatably connected to the lower end of the front shock absorber (11), second ends of the two first rocking rods (121) are pivotally connected to the frame (10), respectively, and a pivot axis of the second end of each of the two first rocking rods (121) is the rotation axis of the first suspension rocker arm (12).

7. The vehicle (100) according to claim 6, wherein a first connecting rod (13) is connected between the two first rocking rods (121).

8. The vehicle (100) according to claim 7, wherein the two first rocking rods (121) and the first connecting rod (13) are in an "A" shape.

9. The vehicle (100) according to claim 7 or 8, wherein the first connecting rod (13) is connected to a portion of each of the two first rocking rods (121) adjacent to the rotation axis of the first suspension rocker arm (12).

10. The vehicle (100) according to any one of claims 6 to 9, wherein a second suspension rocker arm (14) is arranged below the first suspension rocker arm (12), a first end of the second suspension rocker arm (14) is rotatably connected to the first ends of the two first rocking rods (121) through a steering knuckle (15), and a second end of the second suspension rocker arm (14) is pivotally connected to the frame (10).

11. The vehicle (100) according to claim 10, wherein the second suspension rocker arm (14) comprises two second rocking rods (141), first ends of the two second rocking rods (141) are rotatably connected to the steering knuckle (15), and second ends of the two second rocking rods (141) are pivotally connected to the frame (10), respectively.

12. The vehicle (100) according to claim 11, wherein a second connecting rod (16) is connected between the two second rocking rods (141).

13. The vehicle (100) according to claim 12, wherein the two second rocking rods (141) and the second connecting rod (16) are in an "A" shape.

14. The vehicle (100) according to claim 12 or 13, wherein the second connecting rod (16) is connected to a portion of each of the two second rocking rods (141) adjacent to the first end of each of the two second rocking rods (141); or
the second connecting rod (16) is connected to a portion of each of the two second rocking rods (141) adjacent to the second end of each of the two second rocking rods (141).

15. The vehicle (100) according to any one of claims 1 to 14, wherein the vehicle (100) is an all-terrain vehicle (100).
